(19) **Europäisches Patentamt**

**European Patent Office**

**Office européen des brevets**

(11) **EP 1 405 835 B1**

(12) **FASCICULE DE BREVET EUROPEEN**

(45) Date de publication et mention
de la délivrance du brevet:
**26.04.2006 Bulletin 2006/17**

(51) Int Cl.:
*C04B 14/30* (2006.01)    *C04B 28/04* (2006.01)

(21) Numéro de dépôt: **03292134.8**

(22) Date de dépôt: **29.08.2003**

(54) **Mélange granulaire photocatalytique pour mortier et béton et son utilisation**

Granulatförmige photokatalytische Mischung für Mörtel oder Beton und ihre Verwendung

Granular photocatalytic mixture for mortar or concrete and its use

(84) Etats contractants désignés:
**AT BE BG CH CY CZ DE DK EE ES FI FR GB GR
HU IE IT LI LU MC NL PT RO SE SI SK TR**
Etats d'extension désignés:
**AL LT LV MK**

(30) Priorité: **03.10.2002 FR 0212221**

(43) Date de publication de la demande:
**07.04.2004 Bulletin 2004/15**

(73) Titulaire: **CIMENTS FRANCAIS
F-92800 Puteaux (FR)**

(72) Inventeurs:
• **Bonafous, Laurent
78000 Versailles (FR)**
• **Cassar, Luigi
20097 S. Donato Milanese (IT)**
• **Cassat, Pierre
28260 Le Mesnil Simon (FR)**
• **Colombet, Pierre
44100 Nantes (FR)**
• **Guillot, Laurent
38170 Seyssinet-Pariset (FR)**

(74) Mandataire: **Laget, Jean-Loup
Cabinet LOYER
161, rue de Courcelles
75017 Paris (FR)**

(56) Documents cités:
**EP-A- 0 885 857        EP-A- 0 919 667
EP-A- 1 162 182         WO-A-98/05601
US-B1- 6 406 536**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne un mélange granulaire photocatalytique pour béton ou mortier, les bétons ou mortiers renfermant un tel mélange et leur utilisation dans les domaines de la construction ou la rénovation de bâtiments, ou des revêtements routiers.

L'utilisation de photocatalyseurs tel que $TiO_2$, par exemple dans sa variété cristallographique anatase et sous forme de poudre, pour la réalisation de dispositifs permettant l'élimination de sources de salissures ou de substances odorantes, nuisibles à la santé, est un procédé bien connu. La poudre de $TiO_2$ est déposée en surface du dispositif de façon à assurer une interface la plus grande possible avec l'environnement extérieur, le maintien de la poudre sur le substrat étant assuré par une colle ou un liant. Ce liant peut être un liant inorganique hydraulique tel que le ciment Portland comme décrit dans les demandes de brevet WO 98/05601 et EP-A-0885857.

La couche de photocatalyseur qui apparaît en surface et qui adhère au substrat par l'intermédiaire du liant peut éventuellement être renforcée en comblant les interstices entre les particules de photocatalyseur par des grains plus petits permettant, par frittage à l'état solide, de mieux lier les grains de photocatalyseur entre eux. Les petits grains, de métal Ag ou Pt, ou d'oxyde d'étain $SnO_2$ par exemple, permettent ainsi d'augmenter la tenue mécanique de la couche de photocatalyseur. Un tel matériau est décrit dans la demande de brevet EP-A-0684075 (TOTO Ltd.). Les particules de photocatalyseur ont en général un diamètre de l'ordre de 0,1 $\mu$m et sont monodisperses, les petites particules de Ag, Pt ou $SnO_2$ comblant les interstices ont en général un diamètre de l'ordre de 0,01 $\mu$m. La préparation d'un tel matériau présente comme inconvénient majeur de comporter une étape de frittage qu'il n'est pas possible de réaliser quel que soit le support, en particulier une telle étape est impossible en extérieur, sur des constructions, murs, sols de grande surface, etc.

En outre, les liants hydrauliques sont très souvent destinés à la construction de bâtiments, d'ouvrages d'art, d'éléments structuraux et de revêtements routiers. Leur coût de production doit être nécessairement faible compte-tenu des volumes de matériaux en jeu. Or, le coût des photocatalyseurs comme $TiO_2$ est généralement 10 à 100 fois plus élevé. Par conséquent, si l'on veut maintenir un coût acceptable par le marché pour les liants hydrauliques contenant des particules de photocatalyseur, il est nécessaire de limiter la proportion de telles particules, ce qui par conséquent limite l'efficacité photocatalytique du liant hydraulique. Il est donc de première importance d'augmenter l'efficacité photocatalytique propre du photocatalyseur (sans surcoût) pour pouvoir en diminuer la proportion.

Par ailleurs, la proportion de particules photocatalytiques ne peut excéder une certaine valeur (30-40% du volume total liant + photocatalyseur) au-delà de laquelle le liant ne pourrait pas jouer son rôle : le photocatalyseur, à grains plus fins en général (0,1 $\mu$m) que les grains de ciment (10 $\mu$m), se détacherait alors du matériau. L'efficacité photocatalytique des liants hydrauliques contenant des particules de photocatalyseur ne peut donc pas être améliorée en augmentant la proportion de photocatalyseur au-delà de cette limite. D'où la nécessité d'augmenter l'activité photocatalytique, à proportion de photocatalyseur constante.

Une des solutions proposées est d'accroître l'efficacité des photocatalyseurs par dopage ou création de lacunes en oxygène (voir les articles de MASAKAZU ANPO et al. dans Res. Chem. Intermed 1998, Vol. 24, n° 2, p. 143-149 et de MASATO TAKEUCHI et al. dans Catalysis letters 2000, 67(2-4), p. 135-137). Cependant, ces produits présentent un surcoût très important, incompatible pour une utilisation à grande échelle dans des compositions pour mortiers et bétons, par exemple.

Il a maintenant été découvert de manière surprenante qu'en mélangeant des particules de photocatalyseurs de différentes granulométries (ou classes granulaires), présentant des surfaces spécifiques différentes, dans une composition pour béton ou mortier, avec un liant hydraulique, sans frittage, il est possible d'obtenir un effet photocatalytique nettement amélioré par rapport aux photocatalyseurs de chaque classe granulaire d'origine.

Ceci permet de préparer des bétons ou mortiers présentant une fonction photocatalytique importante et donc un caractère autonettoyant, en dégradant les molécules retenues à leur surface, ou à proximité de leur surface.

Par conséquent, la présente invention concerne un mélange granulaire photocatalytique pour mortier ou béton constitué de particules de dioxyde de titane de n classes granulaires, présentant des surfaces spécifiques différentes, n étant un entier supérieur ou égal à 2.

En effet, de façon surprenante, il a été constaté qu'une composition à base de liant hydraulique, par exemple un béton ou un mortier renfermant un tel mélange granulaire présente un effet synergique important, à savoir une augmentation de l'activité photocatalytique bien au-delà de l'activité photocatalytique de chaque composition à base de liant hydraulique ne renfermant qu'une seule classe granulaire, à une seule gamme de surface spécifique B.E.T.

De manière avantageuse, l'effet catalytique est particulièrement amélioré lorsque le mélange est constitué de deux classes granulaires différentes, présentant des surfaces spécifiques B.E.T. $S_1$ et $S_2$, satisfaisant à la relation $S_1/S_2 \geq 1,7$, $S_1$ étant la surface spécifique moyenne de la classe de plus grande surface spécifique et $S_2$ étant la surface spécifique moyenne de la classe de plus faible surface spécifique, de préférence lorsque $S_1/S_2 \geq 2$, et de manière encore plus préférée lorsque $S_1/S_2 \geq 5$.

Cet effet spécifique est notamment observé lorsque la taille des particules de catalyseur est comprise entre 0,010 et 0,500 μm environ et plus particulièrement lors qu'une des classes granulaires est voisine ou inférieure à 0,100 μm.

Ledit mélange granulaire photocatalytique peut se présenter sous la forme d'une poudre.

Dans cette application particulière aux bétons ou mortiers, il a été aussi observé qu'un mélange granulaire photocatalytique se présentant sous la forme d'une suspension aqueuse montrait une activité photocatalytique supérieure à celle de la poudre.

La suspension aqueuse renferme avantageusement un agent dispersant, de préférence compatible avec les milieux cimentaires, bétons et mortiers et choisi par exemple parmi le pyrophosphate de sodium, le diméthylamino-2 propanol, l'acide citrique, les polyacrylates, les nonylphénol polyoxygénés, les copolymères méthacrylates de sodium/ amines tertiaires, ..., cette liste n'étant pas limitative.

Lorsque la suspension aqueuse renferme le diméthylamino-2 propanol comme agent dispersant, une teneur totale en particules supérieure à 30 % en poids environ est possible, cette teneur pouvant être avantageusement comprise entre 40 et 60 % en poids environ.

La suspension peut également renfermer un agent épaississant en tant qu'additif connu pour améliorer la stabilité de la suspension. Il doit bien entendu être compatible avec le milieu dans lequel la dispersion sera introduite, à savoir ici les bétons ou mortiers. Cet agent épaississant peut être choisi par exemple parmi la gomme xanthane, la gomme arabique, les éthers de cellulose.

Dans le cas d'un mélange selon l'invention à deux classes granulaires, les effets synergiques photocatalytiques ont été notamment observés lorsque le mélange renferme de 10 à 90 % en poids sec de la première classe granulaire et de 90 à 10 % en poids sec de la seconde classe granulaire, et plus particulièrement lorsqu'il renferme de 20 à 80 % en poids sec de la première classe granulaire et de 80 à 20 % en poids sec de la seconde classe granulaire.

En outre, l'effet synergique a été constaté en particulier lorsque le photocatalyseur est un oxyde de titane, majoritairement sous la forme cristallographique anatase.

Il est à noter que les procédés de synthèse de $TiO_2$ anatase actuellement utilisés conduisent à l'obtention de poudres quasi monodisperses dont les tailles de particules sont dictées par la nature du procédé. Il est donc impossible, sauf par mélange, de réaliser une poudre de $TiO_2$ à distribution granulaire élargie (c'est-à-dire bimodale ou multimodale), et notamment avec des rapports de tailles moyennes des particules supérieures ou égales à 2 ou 5.

La surface spécifique B.E.T. des échantillons de photocatalyseurs testés augmente lorsque la taille des particules diminue : les particules présentent en effet une plus grande surface totale disponible, donc active.

Par conséquent, le mélange de photocatalyseurs présentant des particules de différentes classes granulaires, correspond donc à un mélange de particules de différentes surfaces spécifiques. Les plus petites particules ont une surface spécifique B.E.T. $S_1$ plus importante, et inversement les plus grosses particules ont une surface spécifique B.E.T. $S_2$ plus faible ($S_1 > S_2$) ; de préférence le rapport $S_1/S_2$ est supérieur ou égal à 1,7 environ, et avantageusement supérieur ou égal à 2 environ, voire même supérieur ou égal à 5.

Le mélange granulaire photocatalytique est particulièrement approprié dans des compositions pour béton ou mortier comprenant, pour 70 à 99,5 parties en poids environ d'un liant hydraulique, de 0,5 à 30 parties en poids environ, en matières sèches, d'un mélange granulaire photocatalytique selon l'une des revendications 1 à 12, et de préférence pour 90 à 99 parties en poids de liant hydraulique, de 1 à 10 parties en poids dudit mélange.

Le liant hydraulique est avantageusement un ciment composé d'un clinker et d'un régulateur de prise éventuel (gypse par exemple), et renfermant d'autres additifs si nécessaire, de manière préférée, le liant hydraulique est du ciment Portland, ou de la chaux hydraulique naturelle ou artificielle, ou un mélange de ces derniers.

La présente invention concerne également tout béton ou mortier préparé à partir des compositions susmentionnées ou à partir de composants séparés auxquels le mélange granulaire photocatalytique est ajouté au moment du gâchage (par exemple lorsque ledit mélange est sous la forme d'une suspension aqueuse qui ne peut être ajoutée qu'à ce stade).

De tels mortiers ou bétons présentent la propriété, grâce au photocatalyseur, d'être capables de dégrader en présence de lumière (U.V. et/ou visible) les substances polluantes en contact avec sa surface : il peut s'agir de composés présents dans l'environnement, tels que $NO_x$, $SO_x$, PM10 ou des gaz d'échappement automobiles ou industriels, des composés organiques volatils (C.O.V.) tels que des composés aromatiques, des pesticides, ou encore des moisissures, des bactéries...

Le matériau est aussi dit «autonettoyant», car il conserve un aspect propre au cours du temps en dégradant au fur et à mesure les substances se déposant à sa surface.

Afin de quantifier ce caractère «d'autonettoyabilité», les inventeurs ont mis au point divers procédés permettant en quelque sorte de «chiffrer» l'activité photocatalytique du mélange granulaire selon l'invention, par rapport à celle d'un catalyseur d'une seule classe granulométrique (ou une seule surface spécifique).

Ces procédés font appel à la mesure :

- soit du taux de dégradation, d'une molécule colorée appliquée à la surface d'une plaque renfermant ledit mélange ;

- soit du taux de destruction d'un polluant retenu à la surface ou au voisinage d'un tel matériau renfermant ledit mélange ;

après exposition à un rayonnement UV et/ou visible durant un temps donné, fixé à une valeur comprise généralement entre 5 et 30 heures. (Ce temps peut cependant être supérieur pour des mesures effectuées par exemple en extérieur, après exposition à la lumière naturelle ou aux rayonnements solaires directs).

- soit de la durée nécessaire pour qu'une surface retrouve une réflectance donnée après application d'une molécule colorée.

Des performances très intéressantes et surprenantes ont été constatées notamment sur des bétons ou mortiers incluant le mélange granulaire photocatalytique de l'invention qui présentent :

- un taux de dégradation, après exposition à un rayonnement UV et/ou visible durant un temps donné, d'un colorant organique appliqué à leur surface, supérieur ou égal à 120, par référence à un taux de dégradation de 100 obtenu avec une composition identique renfermant la même teneur en poids du même photocatalyseur à une seule classe granulaire de plus grande surface spécifique B.E.T. $S_1$, et/ou

- un taux de destruction d'un polluant retenu sur leur surface, supérieur à 80 %, après exposition à un rayonnement UV et/ou visible durant un temps donné, et/ou

- une durée nécessaire pour que leur surface retrouve une réflectance au moins égale à 90 % de la réflectance initiale, inférieure à 8 heures, après application d'un colorant organique puis exposition à un rayonnement UV et/ou visible.

Le colorant organique susmentionné peut être choisi parmi la rhodamine B, le bleu de méthylène, la phénanthroquinone, et le vert de bromocrésol.

Les bétons ou mortiers susmentionnés, ainsi que les compositions à base de liant cimentaire incluant le mélange granulaire photocatalytique selon l'invention, qui trouvent une application intéressante sous la forme d'enduit d'épaisseur de couche allant du millimètre au centimètre environ ou dans des peintures minérales, peuvent être utilisés dans le domaine du génie civil et de la de la construction ou la rénovation de bâtiments, ou encore dans le domaine des revêtements routiers.

La présente invention sera mieux comprise à l'aide des exemples qui suivent, en référence aux figures annexées, parmi lesquelles :

la Figure 1　présente l'évolution colorimétrique de la surface teintée et d'un matériau fabriqué à partir d'une composition selon l'invention ;

la Figure 2　montre les taux de dégradation de rhodamine B obtenus avec différents pourcentages de mélanges de $TiO_2$ dans des compositions selon l'invention.

la Figure 3　montre les taux de dégradation de vert de bromocrésol obtenus avec différents pourcentages de $TiO_2$ dans des compositions selon l'invention.

les Figures 4 et 5　comparent la stabilité de suspensions aqueuses de $TiO_2$.

**EXEMPLES 1 à 4 :**

Les exemples 1 à 4 ont été réalisés dans des conditions identiques :

a- Caractéristiques des matières premières utilisées

Des plaques carrées de 15 cm de côté et 2 cm d'épaisseur de mortier ont été préparées selon la norme NF EN 196-3 à partir des matières premières suivantes :

. 100 parties en poids de Ciment : CEM 1 52.5N CE CP2 NF «SB» de l'usine de Cruas (Société Ciments Calcia - France) présentant les caractéristiques suivantes :

- surface spécifique Blaine = 4050 cm$^2$/g

- diamètre moyen = 12,0 μm

- refus à 40 μm = 5,0 %

. 1, 2 ou 5 parties en poids de TiO2 sous forme de poudre sèche :

- AHR de la Société Tioxide

- AT1 de la Société Millennium

- PC105 de la Société Millennium

Leurs caractéristiques physiques sont regroupées dans le Tableau 1.

Tableau 1 : Caractéristiques des différents oxydes de titane utilisés

|  | Taille des particules (cristallites) (nm) | Surface Spécifique moyenne B.E.T. (m$^2$.g$^{-1}$) |
|---|---|---|
| AHR | 150 | $S_2 = 11$ |
| AT1 | 150 | $S_2 = 10$ |
| PC105 | 15-25 | $S_1 = 85$ |

300 parties en poids de sable : Sable CEN
50 parties en poids d'eau (rapport eau/ciment = 0,5)

b- <u>Procédure de détermination de l'activité photocatalytique</u>

Le test «d'auto-nettoyabilité» consiste à suivre l'évolution colorimétrique sous éclairage artificiel en fonction du temps, d'échantillons de mortier sous forme de plaques préparées selon le point a ci-dessus, dont une des faces est initialement teintée par application de rhodamine B ($C_{28}H_{31}ClN_2O_3$) ou de vert de bromocrésol ($C_{21}H_{14}Br_4O_5S$). La quantité précise de colorant déposée est de 3 μg.cm$^2$ pour la rhodamine B et de 2,5 μg.cm$^{-2}$ pour le vert de bromocrésol.
La face teintée des échantillons est exposée pendant 30 heures à une lumière artificielle dont le rayonnement est semblable à celui du soleil naturel. La lampe utilisée est une lampe OSRAM Ultravitalux® 300W placée de telle façon que l'irradiance en surface de l'échantillon soit de 10W.m$^{-2}$. Les mesures colorimétriques sont réalisées à l'aide d'un colorimètre tristimulus (Minolta CR 231). Les résultats obtenus sont exprimés dans le système CIE LAB (L*, a*, b*). Le facteur L* correspond à la luminosité. Les facteurs a* et b*, composantes chromatiques, correspondent respectivement aux axes de couleur selon :
Blanc (L* =100) - Noir (L* = 0)
Vert (a* négatif) - Rouge (a* positif)
Bleu (b* négatif) - Jaune (b* positif)
L'efficacité photocatalytique du liant est jugée selon la capacité de la face initialement teintée à retrouver plus ou moins rapidement sa couleur originelle, du fait de la destruction de la molécule colorante. Dans le cas de la rhodamine B, de couleur rouge, ainsi que pour le vert de Bromocrésol, l'évolution la plus significative est celle du facteur a*.
La vitesse de destruction du colorant, Va* (valeur absolue_en unité arbitraire), s'exprime donc selon la relation suivante :

$$Va* = \left| \int_{t=0}^{t=5h} \frac{\partial a*(t)}{\partial t} . dt \right| \times \frac{100}{V_{a* \text{ référence}}}$$

que l'on peut calculer en considérant que :

$$a*(t) = A \times e^{-Bxt} + \frac{C}{(t+D)} + a*_{PP}$$

A, B, C et D étant des paramètres détermines par ajustement des courbes calculées et expérimentales. $a*_{pp}$ est la valeur de a* pour le mortier avant application du colorant.

$V_{a* \text{ référence}} = \left| \int_{t=0}^{t=5h} \frac{\partial a*_{PC105}(t)}{\partial t} . dt \right|$ est la vitesse de référence. Sa valeur est fixée à 100.

Elle correspond au mortier de référence confectionné à partir du liant pour lequel le photocatalyseur est uniquement de plus faible granulométrie (c'est-à-dire de surface spécifique B.E.T. la plus élevée), ici le dioxyde de titane PC105.

c- Evolution colorimétrique de la surface teintée

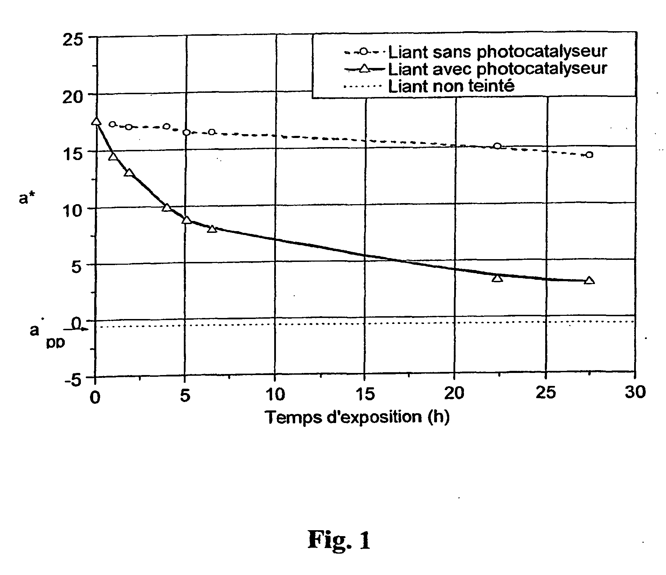

L'évolution du facteur a* a été notée pour la face de la plaque de mortier initialement teintée par le colorant, en fonction du temps d'exposition à la lumière selon la procédure b. Ces résultats sont présentés sur la Figure 1 (cas de la rhodamine B).

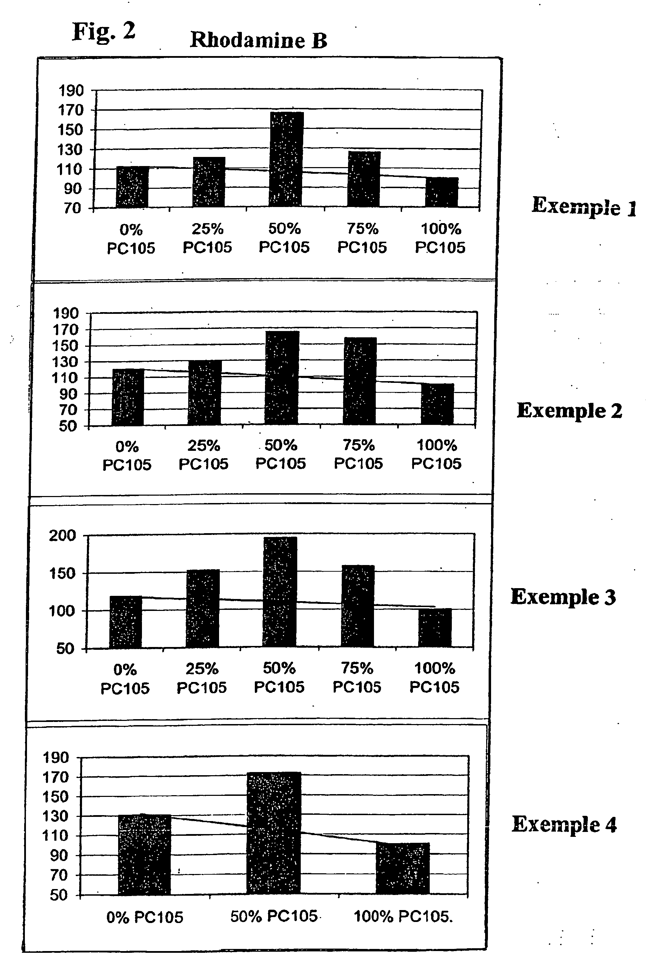

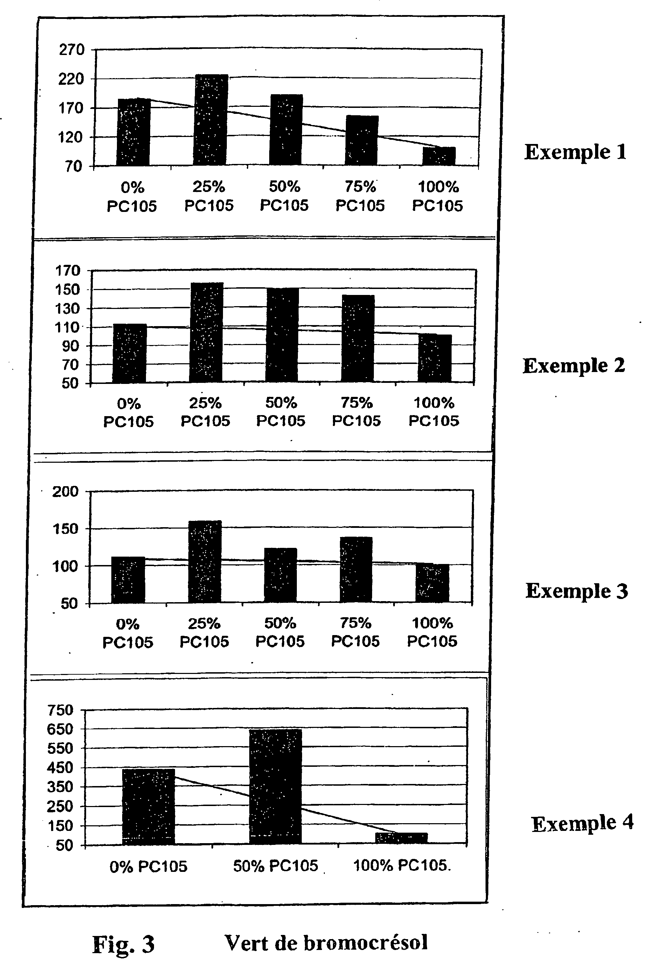

Différentes teneurs totales en photocatalyseur ont été testées : elles font l'objet des exemples 1 à 4 ci-après, illustrés sur la Figure 2 (Rhodamine B) et sur la Figure 3 (vert de bromocrésol).

A chaque fois le dioxyde de titane PC105 (de plus faible granulométrie, et de surface spécifique plus élevée $S_1$) sert de référence (Va* = 100).

La durée d'exposition était de 30 heures, mais on a constaté peu de d'évolution entre 5 heures et 30 heures..

Exemple 1 - Teneur totale en $TiO_2$ =1%

Tableau 2

| $V_a*$(u.a.) | 100% AHR | 75% AHR 25% PC105 | 50% AHR 50% PC105 | 25% AHR 75% PC105 | 100% PC105 |
|---|---|---|---|---|---|
| Rhodamine B | 112 | 120 | 166 | 126 | 100 |
| Vert de bromocrésol | 184 | 224 | 189 | 154 | 100 |

Exemple 2 - Teneur totale en $TiO_2$ = 2%

Tableau 3

| $V_a*$(u.a.) | 100% AHR | 75% AHR 25% PC105 | 50% AHR 50% PC105 | 25% AHR 75% PC 105 | 100% PC105 |
|---|---|---|---|---|---|
| Rhodamine B | 120 | 129 | 165 | 157 | 100 |
| Vert de bromocrésol | 112 | 155 | 149 | 142 | 100 |

Exemple 3 - Teneur totale en $TiO_2$ = 2%

Tableau 4

| $V_a^*$(u.a.) | 100% AT1 | 75% AT1 25% PC105 | 50% AT1 50% PC105 | 25% AT1 75% PC105 | 100% PC105 |
|---|---|---|---|---|---|
| Rhodamine B | 118 | 152 | 194 | 157 | 100 |
| Vert de bromocrésol | 111 | 158 | 121 | 136 | 100 |

Avec cette concentration en mélange photocatalytique, on atteint un taux de dégradation presque doublé en utilisant un mélange équipondéral de dioxydes de titane AT1 et PC 105.

Exemple 4 - Teneur totale en $TiO_2$ = 5%

Tableau 5

| $V_a^*$(u.a.) | 100% AHR | 50% AHR+50% PC105 | 100% PC105 |
|---|---|---|---|
| Rhodamine B | 130 | 172 | 100 |
| Vert de bromocrésol | 433 | 634 | 100 |

Une vitesse de dégradation très élevée a été obtenue avec un mélange équipondéral de AHR et de PC105.

Exemple 5 - Ciment gris

Dans les mêmes conditions que les exemples 1 à 4 ci-dessus, une plaque préparée à l'aide de ciment gris et renfermant 2 % d'un mélange photocatalytique $TiO_2$ introduit sous forme de poudre a été recouvert d'un colorant organique.

Les résultats ont été comparés à un ciment blanc (exemple 2) et à un ciment sans photocatalyseur.

Tableau 6

| $V_a^*$ (u.a.) | Témoin | Ciment Gris | Ciment Blanc |
|---|---|---|---|
| | 0% $TiO_2$ | 2% $TiO_2$ (50% AHR/50% PC105) | 2% $TiO_2$ (50% AHR/50% PC105) |
| Rhodamine B | 100 | 910 | 600 |
| Vert de bromocrésol | 100 | 170 | 290 |

La teinte du ciment n'est donc pas un obstacle à la dégradation des molécules colorantes : des taux de dégradation améliorés sont aussi observés avec du ciment gris.

Exemple 6 - Enduit

Un enduit préparé à partir des constituants suivants :

- 45,28 parties de ciment blanc (en poids)
- 45,28 parties de filler calcaire
- 4,44 parties de métakaolin
- et 5,00 parties de dioxyde de titane sous forme pulvérulente

auxquels ont été incorporés les adjuvants ci-après :

- 2 parties en poids (en matières sèches) de superplastifiant
- 0,22 parties en poids d'épaississants
- 2 parties en poids d'un agent anti-retrait

et une quantité d'eau selon un rapport pondéral eau/total des matières solides compris entre 0,20 et 1 (selon l'épaisseur de l'enduit souhaitée), a été appliqué sur une surface béton ou mortier (sans photocatalyseur).

Les taux de dégradation observés par rapport à un enduit sans photocatalyseur sont présentés ci-après :

Tableau 7

| $V_a*$ | 0 % $TiO_2$ | 5 % $TiO_2$ (50 % AHR/50 % PC105) |
|---|---|---|
| Rhodamine | 100 | 120 |
| Vert de bromocrésol | 100 | 186 |

Les résultats obtenus sont du même ordre de grandeur qu'avec le ciment gris (cf. exemple 5 : vert de bromocrésol).

Exemple 7 - Autres colorants

Dans cet exemple, ont été testés la phénanthroquinone ($C_{14}H_8O_2$) et le bleu de méthylène ($C_{16}H_{18}ClN_3S$), selon une procédure d'application sur une plaque de mortier blanc conforme à celle des exemples 1 à 4.

La quantité de colorant déposée en surface de la plaque est de 0,1 mg/cm$^2$. Les faces ainsi teintées ont été éclairées par quatre lampes de 400 W (ayant un spectre d'irradiation supérieur à 290 mm), à une température de 25° C et à pression atmosphérique.

A l'aide d'un spectro-colorimètre, on a mesuré la réflectance (R %) en fonction de la longueur d'onde. Le traitement des spectres obtenus permet de calculer le temps nécessaire pour que l'échantillon (la face teintée de la plaque) retrouve une réflectance au moins égale à 90 % de sa réflectance initiale (avant application du colorant). Les résultats obtenus sont regroupés dans le tableau 9 ci-après.

La teneur en $TiO_2$ (poudre) était de 2 % par rapport au poids de ciment.

En plus des photocatalyseurs décrits dans le tableau 1, de nouveaux photocatalyseurs ont été testés, leurs paramètres physiques sont les suivants :

| | Taille des particules (cristallites) (nm) | Surface Spécifique moyenne B.E.T. (m².g$^{-1}$) |
|---|---|---|
| PC50* | 20-30 | 50 |
| PC500* | 5-10 | > 250 |

Tableau 8

* (commercialisé par la Société Millennium)

Tableau 9 : Temps nécessaire pour que l'échantillon retrouve une réflectance supérieure ou égale à 90 % de sa réflectance initiale

Le classement est fait selon quatre grandes catégories :

* = > 12 heures
** = 8 à 12 heures
*** = 4 à 8 heures
**** = ≤ 4 heures

|  | AT$_1$ | AHR | PC105 | PC500 | Mélanges |
|---|---|---|---|---|---|
| Bleu de méthylène | ** | ** | * | * | 50 % AT$_1$ + 50 % PC 500 = *** <br> 50 % PC50 + 50 % PC500 = *** |
| Phénanthroquinone | ** | ** | * | * | 60 % AT$_1$ + 40 % PC 500 = **** <br> 50 % AT$_1$ + 50 % PC500 = *** |

On remarque que le retour à 90 % de la réflectance initiale est nettement plus rapide avec un mélange granulaire qu'avec un photocatalyseur d'une seule classe granulaire, à une seule gamme de surface spécifique B.E.T.

Exemple 8 - Pollution aux NO$_x$

Dans une chambre fermée, est placé un échantillon sous la forme d'une plaque de mortier préparée avec du ciment blanc dans les proportions indiquées dans les exemples 1 à 4. La teneur en mélange photocatalytique de mortier est de 3 % (par rapport au poids du ciment).

L'ensemble chambre + échantillon est tout d'abord saturé en NO$_x$ par passage d'un courant gazeux renfermant ce polluant. Puis la chambre est fermée. L'atmosphère au sein de celle-ci contient 1 ppm (volume) de NO$_x$ (valeur Co avant irradiation). L'échantillon est irradié avec une lampe OSRAM de 300 W durant un temps donné (ici 3 minutes). On détermine alors la concentration finale Cf en NO$_x$ au sein de la chambre.

Les résultats obtenus sont les suivants :

Taux de destruction des NO$_x$ (%) = (Co-Cf)/Co x 100 =

- avec AHR seul : < 75 %
- avec PC500 seul : compris entre 80 et 85
- avec un mélange 30 % AHR et 70 % PC500 : > 85 %

Cet exemple montre également un effet synergique du photocatalyseur sous la forme d'un mélange granulaire.

Exemple 9 - Préparation d'une suspension concentrée de TiO$_2$

Dans un bêcher, à 100 parties en poids d'eau, on ajoute successivement x parties de TiO$_2$ AH-R, y parties de TiO$_2$ PC 105 (x + y = 100, ce qui correspond à 50 % de matière solide) puis la quantité de dispersant nécessaire à l'obtention d'un mélange homogène. L'homogénéité s'apprécie après 15 minutes d'agitation de la suspension à l'aide d'un barreau aimanté, à température ambiante (20°C). Le dispersant sélectionné après de nombreux essais est le DMA-2P (diméthylamino 2 propanol). C'est le seul qui permette d'obtenir des suspensions très concentrées (> 30 %) sans mettre en oeuvre un procédé de malaxage intensif quel qu'il soit ni un broyage. Après une période de repos qui n'excède pas 1 minute, on effectue deux prélèvements, l'un destiné aux mesures de turbidité, l'autre aux mesures de viscosité.

La composition des différentes suspensions aqueuses ainsi préparées est indiquée dans le tableau 10 ci-dessous.

Tableau 10 :

| Numéro de la suspension | x (AH-R) | y (PC 105) | DMA-2P % |
|---|---|---|---|
| 0 | 0 | 100 | 3 |
| 1 | 20 | 80 | 1,5 |
| 2 | 40 | 60 | 0,5 |
| 3 | 60 | 40 | 0,5 |
| 4 | 80 | 20 | 0,5 |
| 5 | 100 | 0 | 0,5 |

le pourcentage en DMA-2P est exprimé par rapport à la masse totale eau + TiO$_2$.

En fait, seules les suspensions n° 2, 3, 4 et 5 ont été caractérisées par turbimétrie et viscosimétrie. Les deux autres suspensions (n° 0 et 1) apparaissent d'emblée impossibles à disperser correctement, même en augmentant la quantité de dispersant par rapport à celle utilisée pour les suspensions n° 2, 3, 4 et 5, comme l'indique le tableau 9. A peine l'agitation terminée, la sédimentation se manifeste de façon visible (ce qui traduit la difficulté à défloculer la poudre de $TiO_2$).

a) Turbidimétrie

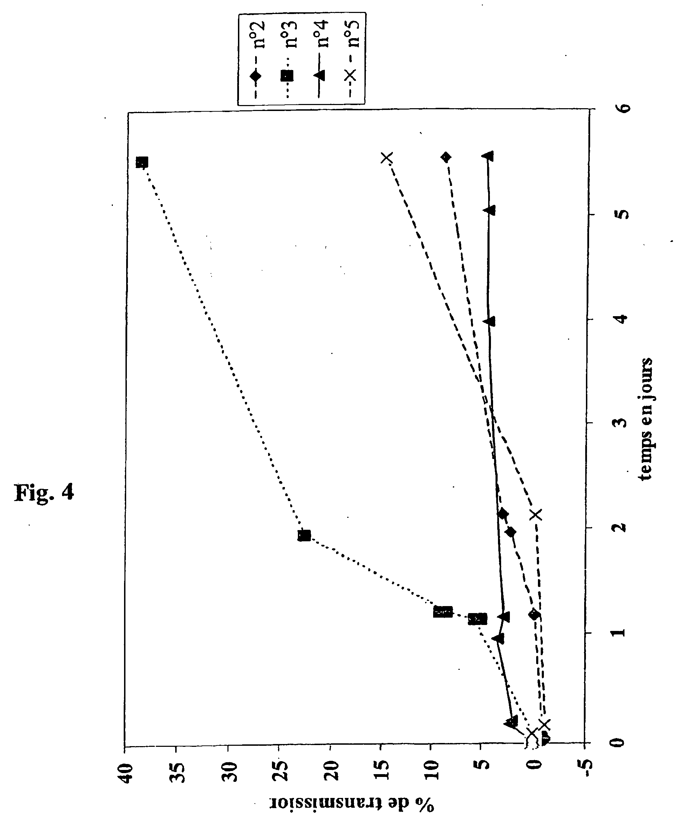

La mesure débute immédiatement après la période de repos évoquée ci-dessus. L'analyseur utilisé est un Turbiscan MA100 de la société FORMULACTION. Le principe de la mesure repose sur la diffusion de la lumière par les particules en suspension. La source lumineuse émet dans le proche infrarouge (850 nm). Le système de détection optique, solidaire de l'émetteur, effectue un balayage complet de la hauteur du tube dans lequel on a versé au préalable la suspension à caractériser. On détecte à la fois le flux transmis et le flux rétrodiffusé, tous les 40 $\mu$m sur une hauteur maximale de 80 mm. Flux transmis et flux rétrodiffusé sont complémentaires, si bien que l'on n'a représenté que le flux transmis dans la Figure 4. Cette figure présente l'évolution du % de transmission à travers la partie la plus haute du tube (le signal est intégré sur 10 mm) pour les différentes suspensions décrites dans le tableau 10, dont l'homogénéité a pu être obtenue après 15 minutes d'agitation.

Au départ de la mesure, la solution est homogène. Lorsque le temps passe, les particules sédimentent, si bien que le pourcentage de transmission décroît lorsque le détecteur se déplace vers la partie basse du tube. De façon équivalente, dans la partie haute du tube, le pourcentage de transmission croît, la suspension devenant plus translucide du fait du départ des particules vers le fond du tube (Figure 4).

La Figure 4 fait clairement apparaître que la suspension n° 4 n'évolue pas au cours du temps, ce qui montre qu'elle est stable pendant la durée de l'expérience. Les autres solutions sont moins stables.

b) Viscosimétrie

Les mesures de viscosité ont été effectuées au moyen d'un rhéomètre à contrainte imposée (AR 1000 de TA Instrument), qui offre la possibilité de contrôler le gradient de cisaillement, en utilisant la configuration des cylindres coaxiaux. La procédure expérimentale a consisté à soumettre les suspensions à la séquence d'opérations suivantes :

- pré-cisaillement à 0,54 s$^{-1}$ pendant 20 minutes,
- augmentation du gradient de cisaillement de 0,54 à 500 s$^{-1}$,
- maintien du gradient de 500 s$^{-1}$ pendant une minute,
- abaissement du gradient de 500 à 0,54 s$^{-1}$.

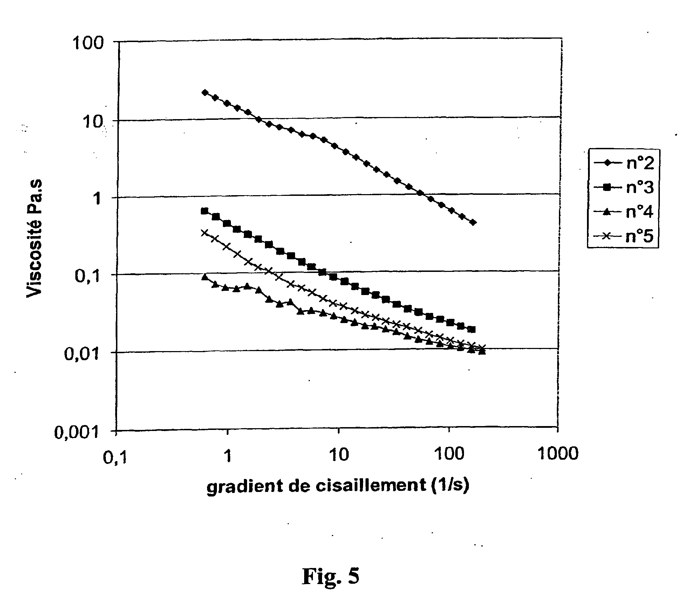

La température a été maintenue constante à 25 °C en utilisant un bain thermostaté. Aucune hystérésis significative n'a été observée entre la montée et la descente en gradient de cisaillement. La viscosité des suspensions telle qu'elle apparaît dans la Figure 5 a été calculée comme étant le rapport entre la contrainte et le gradient de cisaillement. La Figure 5 qui présente la viscosité à l'état statique des suspensions n° 2, 3, 4 et 5 (voir tableau 9) en fonction du gradient de cisaillement, montre clairement que la suspension n° 4 est la moins visqueuse, ce qui est le signe d'une meilleure dispersion des particules de $TiO_2$.

c) Remarques

. Les observations qualitatives portant sur la stabilité des suspensions n° 0 et 1 ainsi que les deux types de caractérisation présentés ci-dessus pour les suspensions n° 2, 3, 4 et 5 permettent de conclure, de façon surprenante, qu'au mélange des deux catégories de $TiO_2$ correspond une suspension de meilleure qualité que celle des deux catégories prises séparément, avec un optimum au voisinage de la composition n° 4.

. Les mesures de turbidité et de viscosité ont également été conduites pour les suspensions dont la composition est présentée dans le tableau 11 :

Tableau 11 :

| x (AH-R) | y (PC 105) |
|----------|------------|
| 65 | 35 |
| 70 | 30 |
| 75 | 25 |
| 90 | 10 |

le pourcentage de DMA-2P est égal à 0,5 dans tous les cas

Les compositions du tableau 9bis sont dans le voisinage de celle de la suspension n° 4. Nous avons caractérisé les suspensions correspondantes par turbimétrie et viscosimétrie pour préciser où se situe l'optimum. Les résultats montrent que l'optimum est peu marqué et qu'il est situé entre les compositions 70/30 et 90/10, les points intermédiaires ayant des caractéristiques identiques à la précision des mesures près.

Exemple 10 - Fabrication d'un mortier à fonction photocatalytique améliorée

Les matières premières utilisées sont identiques à celles présentées dans les exemples 1 à 4.

Au ciment et au sable sont ajoutées les suspensions préparées selon l'exemple 9, avec des mélanges photocatalytique AHR/PC105 dans les mêmes proportions que celles de l'exemple 9 ou un mélange pulvérulent correspondant aux mêmes proportions.

On mélange d'abord l'additif et l'eau de gâchage dans les proportions qui permettent d'obtenir les compositions des mélanges du tableau 12 ci-dessous. L'eau ainsi additionnée de la suspension de $TiO_2$ est ensuite introduite dans le bol d'un malaxeur planétaire classique (par ex. Perrier). On introduit ensuite le ciment. Le malaxage a d'abord lieu à petite vitesse (1 tour/s) pendant 1 minute et 30 s, puis, une fois le sable introduit à son tour, à grande vitesse (3 tours/s) à nouveau pendant 1 minute et 30 s. Il est également possible de malaxer le ciment et le sable avec de l'eau non additionnée de la suspension de $TiO_2$, puis d'ajouter cette suspension en fin de malaxage.

Tableau 12

| Identifcation du mortier | AHR x | PC 105 y | e/c | c/s | Procédé |
|---|---|---|---|---|---|
| M2 | 40 | 60 | 0,5 | 1/3 | suspension |
| M3 | 60 | 40 | 0,5 | 1/3 | suspension |
| M4 | 80 | 20 | 0,5 | 1/3 | suspension |
| M5 | 100 | 0 | 0,5 | 1/3 | suspension |
| M2' | 40 | 60 | 0,5 | 1/3 | poudre |
| M3' | 60 | 40 | 0,5 | 1/3 | poudre |
| M4' | 80 | 20 | 0,5 | 1/3 | poudre |
| M5' | 100 | 0 | 0,5 | 1/3 | poudre |

- e/c est le rapport massique eau totale/ciment (eau totale = eau de gâchage + eau de la suspension lorsqu'elle est utilisée),
- c/s est le rapport massique ciment/sable,
- pour tous les échantillons, la quantité totale de $TiO_2$ (équivalent sec) est égale à 5 % en poids par rapport au ciment.

L'activité photocatalytique a été déterminée conformément à la procédure décrite dans les exemples 1 à 4.

L'évolution du facteur a* a été notée pour la face teintée de la plaque de mortier initialement teintée par la rhodamine B, en fonction du temps d'exposition à la lumière.

La durée d'exposition était de 30 heures. Pour chaque mortier fabriqué selon la présente invention (M2, M3, M4 et M5), la référence est le mortier fabriqué selon le procédé classique (M2', M3', M4' et M5' respectivement).

Le rapport i des vitesses $V_a^*$ (Mi)/$V_a^*$ (M'i) pour chaque échantillon (i = 2, 3, 4, 5) est indiqué dans le tableau 13 qui présente le rapport des vitesses de destruction de la rhodamine B entre mortier fabriqué selon la présente invention et mortier fabriqué selon le procédé avec poudre.

Tableau 13

| i | 2 | 3 | 4 | 5 |
|---|---|---|---|---|
| $V_a^*$(Mi)/$V_a^*$(M'i) | 2,5 | 2,8 | 3,1 | 1,2 |

On constate que l'on a avantage à utiliser $TiO_2$ en suspension dans l'eau comme additif. Le gain est plus marqué pour le mortier M4, c'est-à-dire celui qui correspond à l'utilisation de la suspension n° 4 (voir exemple 9).

**Revendications**

1. Mélange granulaire photocatalytique pour mortier ou béton **caractérisé en ce qu'**il est constitué de particules de dioxyde de titane de n classes granulaires présentant des surfaces spécifiques différentes, n étant un entier supérieur ou égal à 2.

2. Mélange granulaire photocatalytique selon la revendication 1, **caractérisé en ce qu'**il est constitué de deux classes différentes, présentant des surfaces spécifiques B.E.T. $S_1$ et $S_2$, satisfaisant à la relation $S_1/S_2 \geq 1,7$, $S_1$ étant la surface spécifique moyenne de la classe de plus grande surface spécifique et $S_2$ étant la surface spécifique moyenne de la classe de plus faible surface spécifique.

3. Mélange granulaire photocatalytique selon la revendication 2, **caractérisé en** cc que $S_1/S_2 \geq 2$.

4. Mélange granulaire photocatalytique selon l'une des revendications 2 ou 3, **caractérisé en ce que** $S_1/S_2 \geq 5$.

5. Mélange granulaire photocalalytique selon l'une quelconque des revendications 1 à 4, **caractérisé en ce qu'**il se présente sous la forme d'une poudre.

6. Mélange granulaire photocatalytique selon l'une quelconque des revendications 1 à 4, **caractérisé en ce qu'**il se présente sous la forme d'une suspension aqueuse.

7. Mélange granulaire photocatalytique selon la revendication 6, **caractérisé en ce que** la suspension aqueuse renferme un agent dispersant.

8. Mélange granulaire photocatalytique selon la revendication 7, **caractérisé en ce que** l'agent dispersant est choisi parmi le pyrophosphate de sodium, le diméthylamino-2 propanol, l'acide citrique, les polyacrylates, les nonylphénol polyoxygénés, les copolymères méthacrylates de sodium/aminés tertiaires, ...

9. Mélange granulaire photocatalytique selon la revendication 8, **caractérisé en ce que** la suspension aqueuse renferme le diméthylamino-2 propanol comme agent dispersant et une teneur totale en particules supérieure à 30 % en poids environ.

10. Mélange granulaire photocatalytique selon l'une quelconque des revendications précédentes, **caractérisé en ce que** les particules sont constituées d'oxyde de titane se présentant majoritairement sous la forme cristallographique anatase.

11. Mélange granulaire photocatalytique selon l'une quelconque des revendications 2 à 10, **caractérisé en ce qu'**il renferme de 10 à 90 % en poids sec de la première classe granulaire et de 90 à 10 % en poids sec de la seconde classe granulaire.

12. Mélange granulaire photocatalytique selon la revendication 11, **caractérisé en ce qu'**il renferme de 20 à 80 % en poids sec de la première classe granulaire et de 80 à 20 % en poids sec de la seconde classe granulaire.

13. Composition pour mortier ou béton **caractérisée en ce qu'**elle comprend pour 70 à 99,5 parties en poids environ d'un liant hydraulique de 0,5 à 30 parties en poids environ, en matières sèches, d'un mélange granulaire photocatalytique selon l'une des revendications 1 à 12.

14. Composition selon la revendication 13, **caractérisée en ce qu'**elle comprend pour 90 à 99 parties en poids de liant hydraulique, de 1 à 10 parties en poids dudit mélange.

15. Composition selon l'une des revendications 13 ou 14, **caractérisée en ce que** le liant hydraulique est du ciment Portland, de la chaux hydraulique, ou un mélange de ceux-ci.

16. Béton ou mortier préparé à partir de la composition selon les revendications 13 à 15 ou à partir de composants séparés auxquels le mélange selon les revendications 1 à 12 est ajouté au moment du gâchage.

17. Béton ou mortier selon la revendication 16, **caractérisé en ce qu'**il présente un taux de dégradation, après exposition à un rayonnement UV et/ou visible durant un temps donné, d'un colorant organique appliqué à sa surface supérieur ou égal à 120, par référence à un taux de dégradation de 100 obtenu avec une composition identique renfermant la même teneur en poids du même photocatalyseur à une seule classe granulaire de plus grande surface spécifique B.E.T. $S_1$.

**18.** Béton ou mortier selon la revendication 16, **caractérisé en ce qu'**il présente un taux de destruction d'un polluant retenu sur sa surface, supérieur à 80 % après exposition à un rayonnement UV et/ou visible durant un temps donné.

**19.** Béton ou mortier selon la revendication 16, **caractérisé en ce qu'**il présente une durée nécessaire pour que sa surface retrouve une réflectance au moins égale à 90 % de la réflectance initiale inférieure à 8 heures, après application d'un colorant organique puis exposition à un rayonnement UV et/ou visible.

**20.** Béton ou mortier selon les revendications 17 à 19, **caractérisé en ce que** le colorant est choisi parmi la rhodamine B, le bleu de méthylène, la phénanthroquinonc, et le vert de bromocrésol.

**21.** Béton ou mortier selon l'une quelconque des revendications 17 à 20, **caractérisé en ce que** le temps d'exposition au rayonnement UV et/ou visible est fixé à une valeur comprise entre 5 et 30 heures environ.

**22.** Utilisation du béton ou mortier selon l'une quelconque des revendications 16 à 21, dans le domaine du génie civil, de la construction ou de la rénovation de bâtiments.

**23.** Utilisation du béton ou mortier selon l'une quelconque des revendications 16 à 21, dans le domaine des revêtements routiers.

**Claims**

**1.** A photocatalytic granular mixture for mortar or concrete, **characterised in that** it consists of particles of titanium dioxide of n granular classes exhibiting different specific surface areas, n being an integer greater than or equal to 2.

**2.** A photocatalytic granular mixture according to claim 1, **characterised in that** it consists of two different classes, exhibiting B.E.T. specific surface areas $S_1$ and $S_2$ fulfilling the relationship $S_1/S_2 \geq 1.7$, $S_1$ being the mean specific surface area of the class with the larger specific surface area and $S_2$ being the mean specific surface area of the class with the smaller specific surface area.

**3.** A photocatalytic granular mixture according to claim 2, **characterised in that** $S_1/S_2 \geq 2$.

**4.** A photocatalytic granular mixture according to one of claims 2 or 3, **characterised in that** $S_1/S_2 \geq 5$.

**5.** A photocatalytic granular mixture according to any one of claims 1 to 4, **characterised in that** it takes the form of a powder.

**6.** A photocatalytic granular mixture according to any one of claims 1 to 4, **characterised in that** it takes the form of an aqueous suspension.

**7.** A photocatalytic granular mixture according to claim 6, **characterised in that** the aqueous suspension contains a dispersant.

**8.** A photocatalytic granular mixture according to claim 7, **characterised in that** the dispersant is selected from among sodium pyrophosphate, dimethylamino-2-propanol, citric acid, polyacrylates, polyoxygenated nonylphenols, sodium methacrylate/tertiary amine copolymers and the like.

**9.** A photocatalytic granular mixture according to claim 8, **characterised in that** the aqueous suspension contains dimethylamino-2-propanol as dispersant and has an approximate total content of particles of greater than 30% by weight.

**10.** A photocatalytic granular mixture according to any one of the preceding claims, **characterised in that** the particles consist of titanium oxide predominantly in anatase crystallographic form.

11. A photocatalytic granular mixture according to any one of claims 2 to 10, **characterised in that** it contains 10 to 90% by dry weight of the first granular class and 90 to 10% by dry weight of the second granular class.

12. A photocatalytic granular mixture according to claim 11, **characterised in that** it contains 20 to 80% by dry weight of the first granular class and 80 to 20% by dry weight of the second granular class.

13. A composition for mortar or concrete, **characterised in that** it comprises, for approximately 70 to 99.5 parts by weight of a hydraulic binder, approximately 0.5 to 30 parts by weight, as dry material, of a photocatalytic granular mixture according to one of claims 1 to 12.

14. A composition according to claim 13, **characterised in that** it comprises, for 90 to 99 parts by weight of hydraulic binder, 1 to 10 parts by weight of said mixture.

15. A composition according to one of claims 13 or 14, **characterised in that** the hydraulic binder is Portland cement, hydraulic lime, or a mixture thereof.

16. A concrete or mortar prepared from the composition according to claims 13 to 15 or from separate components to which the mixture according to claims 1 to 12 is added at the moment of mixing the concrete or mortar.

17. A concrete or mortar according to claim 16, **characterised in that** it exhibits a degradation rate, after exposure to UV and/or visible radiation for a given time, of an organic colorant applied to its surface of greater than or equal to 120, relative to a degradation rate of 100 obtained with an identical composition having the same content by weight of the same photocatalyst comprising a single granular class of the larger B.E.T. specific surface area $S_1$.

18. A concrete or mortar according to claim 16, **characterised in that** it exhibits a destruction rate of a pollutant retained on its surface of greater than 80% after exposure to UV and/or visible radiation for a given time.

19. A concrete or mortar according to claim 16, **characterised in that** the period required for its surface to regain a reflectance at least equal to 90% of the initial reflectance is less than 8 hours, after application of an organic colorant and then exposure to UV and/or visible radiation.

20. A concrete or mortar according to claims 17 to 19, **characterised in that** the colorant is selected from among rhodamine B, methylene blue, phenanthroquinone and bromocresol green.

21. A concrete or mortar according to any one of claims 17 to 20, **characterised in that** the time of exposure to the UV and/or visible radiation is fixed at a value of approximately between 5 and 30 hours.

22. Use of the concrete or mortar according to any one of claims 16 to 21 in the field of civil engineering, construction or renovation of buildings.

23. Use of the concrete or mortar according to any one of claims 16 to 21 in the field of road surfacing.

**Patentansprüche**

1. Photokatalytische Granulatmischung für Mörtel oder Beton, **dadurch gekennzeichnet, daß** sie aus Titandioxidteilchen aus n Korngrößenklassen gebildet ist, die unterschiedliche spezifische Oberflächen aufweisen, wobei n eine ganze Zahl größer oder gleich 2 ist.

2. Photokatalytische Granulatmischung nach Anspruch 1, **dadurch gekennzeichnet, daß** sie aus zwei unterschiedlichen Klassen gebildet ist, die unterschiedliche spezifische BET-Oberflächen $S_1$ und $S_2$ aufweisen, welche die Beziehung $S_1/S_2 \geq 1{,}7$ erfüllen, wobei $S_1$ die mittlere spezifische Oberfläche der Klasse mit der größeren spezifischen Oberfläche und $S_2$ die mittlere spezifische Oberfläche der Klasse mit der kleineren spezifischen Oberfläche ist.

3. Photokatalytische Granulatmischung nach Anspruch 2, **dadurch gekennzeichnet; daß** $S_1/S_2 \geq 2$ ist.

4. Photokatalytische Granulatmischung nach einem der Ansprüche 2 oder 3, **dadurch gekennzeichnet, daß** $S_1/S_2 \geq 5$ ist.

**5.** Photokatalytische Granulatmischung nach einem der Ansprüche 1 bis 4, **dadurch gekennzeichnet, daß** sie in Form eines Pulvers vorliegt.

**6.** Photokatalytische Granulatmischung nach einem der Ansprüche 1 bis 4, **dadurch gekennzeichnet, daß** sie in Form einer wäßrigen Suspension vorliegt.

**7.** Photokatalytische Granulatmischung nach Anspruch 6, **dadurch gekennzeichnet, daß** die wäßrige Suspension ein Dispergiermittel enthält.

**8.** Photokatalytische Granulatmischung nach Anspruch 7, **dadurch gekennzeichnet, daß** das Dispergiermittel aus Natriumpyrophosphat, Dimethylamino-2-propanol, Zitronensäure, Polyacrylaten, polyoxygenierten Nonylphenoten, Copolymeren aus Natrium/tertiären Aminen-Methacrylaten, ... , ausgewählt ist.

**9.** Photokatalytische Granulatmischung nach Anspruch 8, **dadurch gekennzeichnet, daß** die wäßrige Suspension Dimethylamino-2-propanol als Dispergiermittel enthält und einen Gesamtteilchengehalt von mehr als etwa 30 Gew. % aufweist.

**10.** Photokatalytische Granulatmischung nach einem der vorhergehenden Ansprüche, **dadurch gekennzeichnet, daß** die Teilchen aus Titandioxid bestehen, das vorwiegend in der Kristallform Anatas vorliegt.

**11.** Photokatalytische Granulatmischung nach einem der Ansprüche 2 bis 10, **dadurch gekennzeichnet, daß** sie, jeweils auf das Trockengewicht bezogen, 10 bis 90 % der ersten Korngrößenklasse und 90 bis 10 % der zweiten Korngrößenklasse enthält.

**12.** Photokatalytische Granulatmischung nach Anspruch 11, **dadurch gekennzeichnet, daß** sie, jeweils auf das Trockengewicht bezogen, 20 bis 80 % der ersten Korngrößenklasse und 80 bis 20 % der zweiten Korngrößenklasse enthält.

**13.** Zusammensetzung für Mörtel oder Beton, **dadurch gekennzeichnet, daß** sie pro etwa 70 bis 99,5 Gewichtsteile eines hydraulischen Bindemittels etwa 0,5 bis 30 Gewichtsteile, in der Trockenmasse, einer photokatalytischen Granulatmischung nach einem der Ansprüche 1 bis 12 enthält.

**14.** Zusammensetzung nach Anspruch 13, **dadurch gekennzeichnet, daß** sie pro 90 bis 99 Gewichtsteile des hydraulischen Bindemittels 1 bis 10 Gewichtsteile der Mischung enthält.

**15.** Zusammensetzung nach einem der Ansprüche 13 oder 14, **dadurch gekennzeichnet, daß** das hydraulische Bindemittel Portland-Zement, hydraulischer Kalk oder eine Mischung davon ist.

**16.** Beton oder Mörtel, der ausgehend von der Zusammensetzung nach den Ansprüchen 13 bis 15 oder ausgehend von getrennten Bestandteilen, denen die Mischung nach den Ansprüchen 1 bis 12 zum Zeitpunkt des Anrührens zugefügt wird, hergestellt wird.

**17.** Beton oder Mörtel nach Anspruch 16, **dadurch gekennzeichnet, daß**, nachdem er UV-Strahlung und/oder sichtbarer Strahlung über einen vorgegebenen Zeitraum ausgesetzt war, eine Abbaurate eines auf seine Oberfläche aufgebrachten organischen Farbstoffs von größer oder gleich 120 aufweist, bezogen auf eine Abbaurate von 100, die mit einer identischen Zusammensetzung erhalten wurde, welche den gleichen Gewichtsanteil des gleichen Photokatalysators einer einzigen Korngrößenklasse mit der größeren spezifischen BET-Oberfläche $S_1$ enthält.

**18.** Beton oder Mörtel nach Anspruch 16, **dadurch gekennzeichnet, daß** er eine Zerstörungsrate von mehr als 80 % einer an seiner Oberfläche verbleibenden Verunreinigung aufweist, nachdem er UV-Strahlung und/oder sichtbarer Strahlung über einen vorgegebenen Zeitraum angesetzt war.

**19.** Beton oder Mörtel nach Anspruch 16, **dadurch gekennzeichnet, daß** er eine Zeit von weniger als 8 Stunden nach Aufbringen eines organischen Farbstoffs und anschließender Exposition gegenüber UV-Strahlung und/oder sichtbarer Strahlung benötigt, damit seine Oberfläche ein Reflexionsvermögen von mindestens 90% des ursprünglichen Reflexionsvermögens wiedererlangt.

**20.** Beton oder Mörtel nach den Ansprüchen 17 bis 19, **dadurch gekennzeichnet, daß** der Farbstoff ausgewählt ist aus Rhodamin B, Methylenblau, Phenantrochinon und Bromkresolgrün.

21. Beton oder Mörtel nach einem der Ansprüche 17 bis 20, **dadurch gekennzeichnet, daß** die Dauer der Exposition gegenüber UV-Strahlung und/oder sichtbarer Strahlung auf einen Wert im Bereich von etwa 5 bis 30 Stunden festgelegt ist.

22. Verwendung des Betons oder Mörtels nach einem der Ansprüche 16 bis 21 im Bereich des Bauingenieurwesens, des Bauwesens oder der Gebäuderenovierung.

23. Verwendung des Betons oder Mörtels nach einem der Ansprüche 16 bis 21 im Bereich der Straßenbeläge.

**Fig. 1**

## Fig. 2    Rhodamine B

Exemple 1

Exemple 2

Exemple 3

Exemple 4

Exemple 1

Exemple 2

Exemple 3

Exemple 4

**Fig. 3**     **Vert de bromocrésol**

## Fig. 4

Fig. 5